# EUROPEAN PATENT SPECIFICATION

(11) **EP 1 726 130 B1**
(45) Date of publication and mention of the grant of the patent: **11.07.2007**
(21) Application number: 04739600.7
(22) Date of filing: 04.06.2004
(51) Int. Cl.: H04L 12/56

(54) **ADAPTIVE FORWARDING SYSTEM OPERABLE IN A REPEATER AND A ROUTER MODE**
ADAPTIVES WEITERLEITUNGSSYSTEM, DAS IN EINEM ZWISCHENVERSTÄRKER- UND IN EINEM ROUTER-MODUS BETREIBBAR IST
SYSTEME DE REACHEMINEMENT ADAPTATIF POUVANT ETRE MIS EN OEUVRE DANS UN MODE REPETITEUR ET ROUTEUR

(43) Date of publication of application: 29.11.2006
(73) Proprietor: NTT DoCoMo, Inc., Tokyo (JP)
(72) Inventor: PREHOFER, Christian, 81477 Munich (DE); BETTSTETTER, Christian, 80687 Munich (DE); BAUCH, Gerhard, 80799 Munich (DE)
(74) Representative: Zinkler, Franz
(86) International application number: PCT/EP2004/006046
(87) International publication number: WO 2005/119977

(56) References cited:
- EP-A- 0 999 717
- US-A- 5 953 340
- US-A- 6 130 898

## Description

The present invention is in the field of communications, and in particular in the field of transmitting signals over communication networks.

In order to transmit a data signal from a transmitter to a remote receiver over a communication network, for example a wireless multi-hop access network, the data signal may be transmitted via a plurality of network nodes, for example routers, to the remote receiver, wherein the remote receiver can be an access point for interfacing with for example a fixed core network.

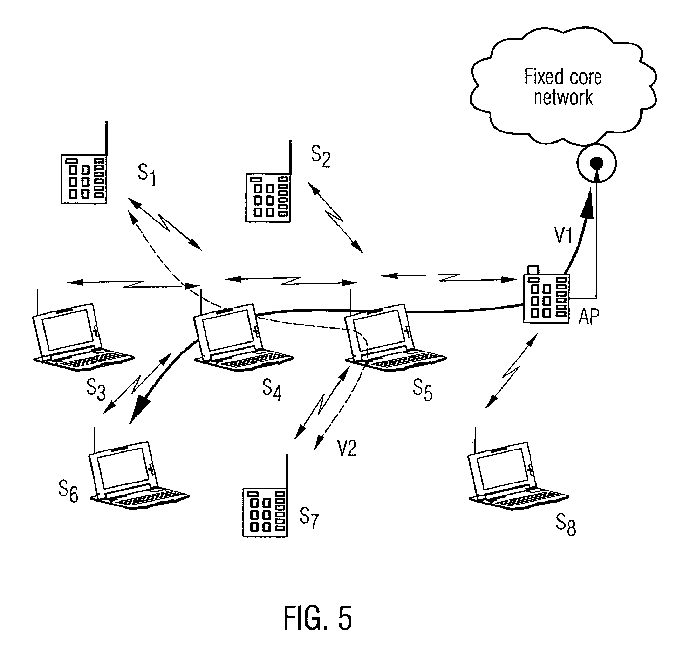

In Fig. 5, by the way of example only, a topology of a wireless multi-hop access network is shown. In Fig. 5, several mobile nodes (S1 to S8) are connected via an access point (AP) or a base station to the fixed part of the cellular network.

As is depicted in Fig. 5, the mobile node S6, which can be considered as being a remote receiver or a transmitter, communicates via the mobile nodes S4 and S5 with the access point.

Using multi-hop access networks has two main motivations. Firstly, a radio coverage of access points can be increased by relaying data. Secondly, a flexibility of transmitting data can be increased and a local self-organisation can be enabled which results in an efficient local communication and local mobility support for, for example, highly mobile nodes or nodes without access to networks. Thirdly, the overall transmit power can be reduced.

However, transmitting over multi-hop networks, i.e. networks comprising one or several network nodes for forwarding data signals, suffers from an increased delay due to multi-hop transmission over several network nodes, for example over several wireless links. The increased delay results from processing the data signal at each network node in accordance with, for example, a layered protocol being used for data transmission. For example, a typical layered protocol comprises a physical layer, a data link layer arranged above the physical layer, a network layer arranged on top of the data link layer, a transport layer arranged on top of the network layer and in application layer arranged on top of the transport layer. A further problem associated with employing multi-hop networks for data transmission is the control of mobility and connectivity as well as quality of service.

Generally speaking, the application layer is configured for managing the information being associated with an application, for example a video data stream, to be transmitted. The application layer directly communicates with the transport layer being formed for providing a transport service, so that the information can be transmitted to its destination. The transport layer communicates directly with the network layer being configured for processing an information frame provided by the transport layer so that communication between two network entities is possible.

For example, the network layer is concerned with routing the data signal through a communication path comprising several network nodes to the remote receiver. For routing purposes, so-called routing tables are used, wherein a routing table comprises a network address of the destination node, a remote receiver, and a network address of the next, intermediate, network node to which the data stream is to be forwarded next. After having received the forwarded data stream, the intermediate network node may also employ a routing table comprising a network address of another network node to which the data stream is to be forwarded next in order to reach the destination node, e.g. the remote receiver.

The network layer may further comprise a plurality of sublayers, for example a medium access control layer being responsible for managing the access to the communication channel.

The next protocol layer is the link layer being, for example, configured for applying a forward error correction encoding, for confirming a correct reception of a signal frame by sending an acknowledgement frame etc. Furthermore, the data link layer may be configured for scheduling, e.g. for determining a time slot for transmitting the data signal.

The data link layer directly communicates with the physical layer being configured for, for example, modulating using a modulation scheme, or amplifying.

Since, in a layered protocol communication scenario, a peer-to-peer communication between associated protocol layers is necessary, a significant processing delay may occur when, for example, the intermediate network node should forward the received data signal to another network node by the means of routing. In this case, the received signal has to be passed through the plurality of protocol layers in order to be processed in accordance with the routing scheme being managed by the network layer. In addition, the data, comprising e.g. a new network address need to be passed back through the data link layer to the physical layer for enabling transmission through the physical channel. However, prior to transmitting, medium access control has to be performed by the network layer in order to avoid collisions.

In order to reduce the processing delay associated with peer-to-peer communication of respective network layers, relays can be employed, which, for example, amplify the radio signal. For example, the network nodes S4 and S5 of Fig. 5 would in this case act as repeating stations in order to forward the data signal to, for example, the access point.

Referring to the layered protocol described above, in the case of relaying only the respective physical layers are employed, which results in little or no signal processing in a relay station and, therefore, in low delay. Moreover, relaying facilities can be provided at low cost. However, the relaying approach suffers from the fact that usually a central coordination is required, so that, for example, a complicated medium access procedure has to be performed. For example, during relaying, the network resources have to be a priori reserved so that, for example, a network node is not concerned with other transmissions. Therefore, a communication channel, i.e. a communication path through the network, between a transmitter via a plurality of network nodes to the remote receiver have to be established a priori. Moreover, the relaying approach is inflexible and complicated for data traffic, although quality of service is possible by the means of central control.

Compared to the relaying approach, the routing approach suffers from longer delays and more extensive equipment since complex processing operations have to be performed for enabling the network layers to communicate with each other. Moreover, since routing may be a dynamic process, higher delays may occur due to more complicated forwarding through the communication network. Moreover, for medium access control in the case of routing, often standard medium access control layers are used, which are, however, ineffective for multimedia applications requiring for example low delays. Additionally, quality of service is difficult since, in each node, the received data signal is first stored in a buffer, processed and then retransmitted. The storing and forwarding mechanism may introduce additional delays, packet losses etc. having a deep impact on quality of service. Nevertheless, the routing approach is very flexible with respect to mobility, new network nodes, mixed air interfaces etc. Moreover, communications can flexibly be performed without a necessity of referring to access points.

US 5,953,340 discloses an adaptive network device including a switch module having several ports and operable according to a first protocol and a repeater module having several ports and operable according to a second protocol. The switch module receives data at a first rate from any port coupled to it and re-transmits the received data to only those ports having coupled devices addressed by the data. The repeater module re-transmits the data to all ports coupled to it so that the data reaches the destination device.

It is the object of the present invention to provide an efficient concept for transmitting a data signal over a communication network.

This object is achieved by an apparatus for transmitting a data signal according to claim 1, or by a method for transmitting a data signal according to claim 29, or by a computer program according to claim 40.

The present invention is based on the finding that data signals can efficiently be transmitted over a communication network via a communication path if communication network nodes are provided, which are capable of selectively managing the data signal in accordance to, for example, a requirement associated with the data signal, e.g. low delay, and/or according to restrictions imposed on the communication network, e.g. flexibility or adaptivity.

The present invention provides a concept for fulfilling the above requirements by providing an apparatus for transmitting a data signal over a communication network to a remote receiver, wherein the apparatus for transmitting may be, for example, a network node. The inventive apparatus is capable of acting in two different modes. In a first mode, e.g. the repeating mode, the apparatus is configured for repeating or relaying the data signal to the remote receiver or to an another network node, wherein preferably only physical layer resources are employed. In a second mode, e.g. the routing mode, the apparatus is formed for routing the data signal to the remote receiver or to another network node, for example, hopping station, wherein also network layer ressources are employed.

A mode selection can be realised, for example, upon receipt of a control information indicating either the repeater mode or the router mode. For example, the control information can be transmitted over the communication network from a control station e.g from a transmitter being responsible for establishing the communication link.

However, the inventive apparatus may adaptively adjust the most suitable mode on a basis of the data signal itself. For example, if the data signal comprises a video stream requiring short transmission delays, then the apparatus for transmitting, acting e.g as a communication node, may adaptively decide in which mode the data stream is to be forwarded. This task comprises extracting information on the kind of the service, e.g. video, from the data signal, checking if either the repeating or routing to an another network node would be advantageous, and sending for example resource reservation information to the another network node informing same of e.g. the repeater mode and repeating the data stream to the other network node. Accordingly, if an additional delay for the data stream is tolerable, the router mode can be used for flexibly forwarding the data signal through the communication network. In the router mode nodes, all protocol layers up to the network layer can be involved in processing the data stream.

In accordance with the present invention, a central unit, which can be the above-mentioned apparatus for transmitting, may be responsible for establishing a direct communication path between a transmitter and a remote receiver via a plurality of network nodes for re-transmitting the data stream within, for example, a certain time slot, in the repeater mode. In this case, the central unit may allocate and reserve the network resources for the communication path to be used for transmission, placing the network nodes into the repeater mode for repeating the data stream and initialising data transmission within the certain time slot. In a time slot following the certain time slot, the network nodes may automatically return an initial mode, which can be an the router mode. Therefore, certain data can quickly be transmitted over the communication network so that, for example, maximum tolerable delays are not exceeded.

In order to achieve the above functionality, the network nodes comprise preferable the functionality of the inventive apparatus for transmitting mentioned above. However, the communication network can be equipped with only few such network nodes in order to establish the inventive, enhanced network functionality.

For example, in the repeater mode, a received signal, which may be a received version of the data signal, is not downconverted into base band in the case of band pass transmission but, for example, an amplified version of the received signal is immediately re-transmitted. An additional filtering for noise reduction may be applied in order to improve the performance. A further improvement can be obtained by additional equalization in the network node (hopping station). In order to perform the equalization, downconversion into base band can be performed, followed by equalizing the base band signal and up-converting the equalized base band signal into band pass for retransmission. In the step of down-converting also a re-modulation may be performed in order to remove the carrier. Accordingly, in the step of up-converting a re-modulation can be performed. It is to be noted that in the repeater mode, also the data link layer functionality can be employed in order to detect and correct errors.

In the router mode, a more sophisticated signal processing approach can be performed, since, the functionality of the data link layer can additionally be involved for e.g. forward error control (FEC) decoding in the hopping station. The signal is then for example further processed in accordance with the network layer processing scheme for routing, wherein a network address of a next network node may be inserted, by the way of example only. The signal is then re-encoded and re-modulated before the amplified signal is re-transmitted. In addition, each network node, for example, each mobile node, may be an ad-hoc router and can store and relay data.

In accordance with the present invention, the repeater approach and the routing approach are combined in a flexible way such that both modes of operation can be used in a communication system. I.e. the amplifier mode enables fast relaying for nodes, which require low delay (repeater mode), and the router mode is used for other communication, for example routing data signals, which can afford longer delays.

Further preferred embodiments of the present invention are described in detail with respect to the following figures, in which:
Fig. 1 shows a block diagram of an inventive apparatus for transmitting data signals;
Fig.2 demonstrates an inventive communication network scenarios;
Fig. 3 demonstrates an inventive time slot reservation;
Fig. 4 demonstrates an inventive communication network scenario; and
Fig. 5 demonstrates a wireless ad-hoc network.

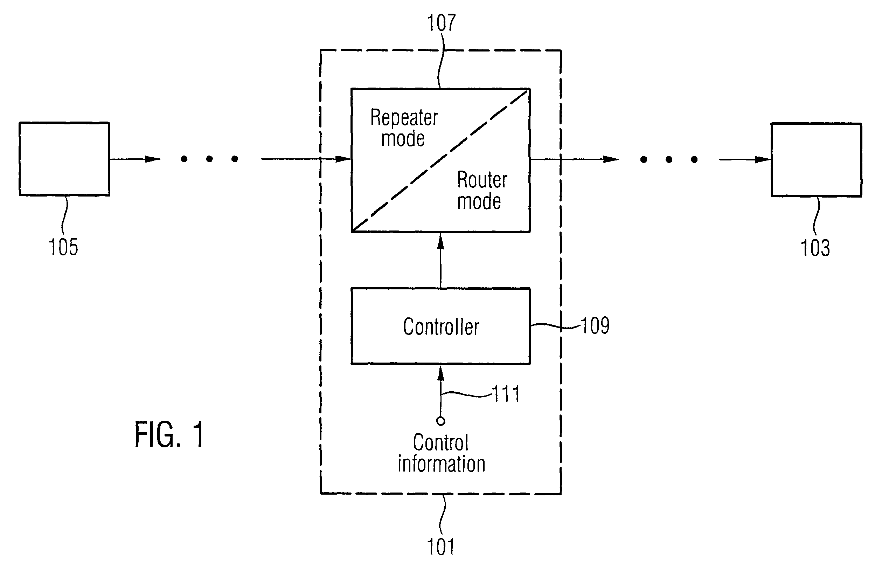

Fig. 1 shows an apparatus 101 for transmitting a data signal over a communication network to a remote receiver 103, wherein the data signal may be transmitted from a transmitter 105, by the way of example only. However, the apparatus 101 for transmitting the data signal may be incorporated in the transmitter 105.

The apparatus 101 for transmitting comprises a forwarder 107 being configured to be placed into a repeater mode for repeating the data signal, or being configured to be placed into a router mode for routing the data signal, as is depicted in Fig. 1. The apparatus 101 further comprises a controller 109 being configured for receiving a control information via an input 111 and for placing the forwarder 107 which has an output in the repeater mode or in the router mode in dependence on the control information. For controlling purposes, the controller 109 comprises an output coupled to an input of the forwarder 107.

For example, the controller 109 may be configured for receiving the control information over the communication network, wherein the control information may be transmitted from the transmitter 105 over the communication network or by a further control unit not shown in Fig. 1 in order to control the operation mode of the forwarder 107.

However, the control information may be extracted from the received version of the data signal at an input of the forwarder 107.

In the repeater mode, the forwarder 107 is preferably configured for amplifying the data signal in order to compensate for the channel attenuation. To do so, the forwarder 107 may be configured for determining a received signal strength on a basis of, for example, an autocorrelation, and for determining a required amplfication factor the data signal is to be weighted by.

If the data signal is a band pass signal, then further down-converting is not necessary. However, the data signal may be a band pass signal occupying a band pass spectral region associated with, for example, a wireless transmission scheme according to any WLAN scheme (WLAN = Wireless Local Area Network). In this case, the forwarder 107 may be configured for amplifying the data signal directly in the band pass spectral region, i.e. for amplifying the band pass signal without down-converting.

However, the forwarder 107 may be configured for down-converting the data signal into a base band in order to obtain a base band data signal, for equalizing the base band data signal in order to obtain an equalized base band signal, and for up-converting the equalized data signal into the band pass spectral region for retransmission. In order to equalize the base band data signal, i.e. in order to remove channel influences resulting in inter-symbol interferences, the forwarder 107 may comprise an equalizer and means for updating the equalizer coefficients in order to take the current channel state into account. For example, the forwarder 107 may be configured for receiving training sequences from a transmitter and adjust the equalizer coefficients using the training sequences. If training sequences are available only at certain time instances, then the forwarder may be configured for interpolating the equalizer coefficients for time instants at which training sequences are not available. In this case, equalizing can be performed at any time without necessity of an additional information exchange for adapting the equalizer coefficients.

The forwarder 107 may further be configured for decoding the equalized base-band signal provided by the equalizer.

Summarizing, the forwarder 107 may formed for relaying the data signal in the repeater mode using preferably physical layer and possibly data link layer functionalities without referring to higher protocol layers, i.e. without referring to the network layer functionalities.

Contrary thereto, in the router mode, the inventive forwarder 107 explicitly exploits the network layer functionality. More specifically, the forwarder 107 is configured for routing the data signal to a next network node in accordance with a connection-less routing policy, or for routing data signals to a next network node or to the remote receiver in accordance with a connection-oriented routing policy.

For routing, the forwarder 107 may comprise routing tables comprising a destination network address and a network address of an intermediate network node to which the data signal is to be transmitted next. In accordance with the connection-less routing policy, the forwarder 107 may be formed for, for example, updating the routing table using routing algorithms, if, for example, a congestion occurs. Therefore, an initial state of the routing table may adaptively be changed during transmission.

If the forwarder 107 is operating in accordance with the connection-oriented routing policy, then the route chosen for the transmission of the data signal is not changed during data transmission. In other words, the communication path is known a priori, so that the forwarder 107 refers to a known, fixed routing table without choosing a new route for every data signal packet.

In order to set up the routing policy of the forwarder 107, the control information may comprise an additional routing policy information. If, for example, the connection oriented routing is to be performed, which is associated with shorter delays than connection-less routing policy, the forwarder 107 may comprise a second routing table being a priori determined, e.g. the current routing table. Therefore, fine adjustment of transmission delays can be achieved.

If connection-less routing is required, then the forwarder 107 may be formed for routing each data packet comprised by the data signal individually over the communication network using, for example, different communication paths.

In the router mode, the forwarder 107 is, for example, configured for analysing a network destination address attached to the data signal and for attaching a network address of a next network node to which the data signal or a data signal packet is to be routed next.

In the router mode, the forwarder 107 may be configured for down-converting the data signal, which is assumed to be a base band signal in this case, to obtain a base band data signal, for equalizing the data signal to obtain an equalized data signal, for forward error correction decoding the equalized data signal to obtain a decoded data signal, for re-encoding the decoded data signal and for up-converting the re-encoded data signal for forwarding. In other words, the forwarder may use the whole functionality of the repeater mode in the router mode.

It is to be noted at this point that the data signal is usually arranged within a data signal frame, the data signal frame comprising e.g. a frame header, network addresses and further information necessary for managing the transmission over the communication network. In the routing mode, the forwarder 107 directly exploits and changes the additional information included in the data frame, for example, network addresses.

In accordance with a further aspect of the present invention, the forwarder 107 may comprise a repeater means for repeating the data signal in the repeater mode, a router means for routing the data signal in the router mode, a switch for switching the data signal or the data signal frame to the repeater means or for switching the data signal or the data signal frame to the router means, wherein the controller is configured for controlling a switching operation of the switch, i.e. for controlling a switching state of the switch.

In addition, the apparatus 101 may further comprise a receiver for receiving the data signal. The data signal, which is to be forwarded to the remote receiver or to an another network node is, for example, transmitted from the remote transmitter 105 over the communication network. However, the data signal may be transmitted from an another network node being arranged along the communication path.

Moreover, the remote transmitter 105 or another node may be configured for transmitting the control information over the communication network. In this case, the receiver may be configured for receiving a receivable version of the control information, for detecting the control information in the receivable version, and for providing the control information to the forwarder 107.

The control information may, however, be transmitted prior to transmitting the data signal. For example, the remote transmitter 105 first establishes the link and transmits the control information to all nodes arranged along the link, i.e. arranged along the communication path. In response to the control information, the forwarder 107 may be placed into the repeater or into the router mode, transmit an acknowledgement information, set-up a communication path to the remote receiver so that, after e.g. reserving the communication path, the data signal can be transmitted.

In accordance with a further aspect of the present invention, the remote transmitter or, generally, a control unit, may be configured for transmitting a composite signal, comprising the data signal and the control information. For example, the composite signal is a data signal frame additionally comprising the control information. The receiver may be configured for detecting the control information in the receivable version of the composite signal by, for example, referring only to that part of the data signal frame that contains a control information field comprising the control information.

If the forwarder 107 acts in the repeater mode, then it may be necessary to inform other network nodes not being involved in transmitting the data signal that a signal transmission to the apparatus for transmitting should be avoided during, for example, a time slot reserved for repeating, in order to avoid interferences or congestion.

For example, the remote transmitter 105 may be configured for transmitting a network control information indicating that a further transmitter or a further network node being within a range of the apparatus for transmitting is configured for transmitting a further data signal in a repeater mode within a reserved time slot or, generally, within a reserved channel. In this case, the receiver may be formed for detecting the network control information, in response to which the controller 109 may be configured for placing the forwarder 107 in a waiting state during the reserved time slot in order to avoid disturbing the further transmitter.

Accordingly, the remote transmitter 105 may be configured for transmitting the network control information to the further transmitter, if the inventive apparatus for transmitting is to be used as a repeater, i.e. if the forwarder is to be placed into the repeater mode.

However, the inventive apparatus for transmitting may further be configured for transmitting the network control information indicating transmission in the repeater mode to other transmitters or to other network nodes being within a range of the apparatus for transmitting and not being involved in transmitting the data signal in order to place the further transmitter or the other network nodes into a waiting state in which transmitting to the inventive apparatus should be avoided.

In accordance with a further aspect the remote transmitter 105 or the control unit may be configured for transmitting path information on a path through the communication network to the remote receiver. In this case, the receiver comprised by the apparatus 101 for transmitting may be formed for detecting the path information and for providing the path information to the forwarder for routing or repeating. The path information may, for example, comprise information on an intermediate network node to which the data signal or a data signal packet is to be transmitted next.

As has been mentioned above, preferably prior to transmitting in repeater mode network resources may be allocated and reserved. For example, the control information indicates a certain channel for transmitting the data signal in the repeater mode or a certain channel for transmitting the data signal in the router mode. The controller 109 may be configured, in response to the additional information on the certain channel, for placing the forwarder 107 into the repeater mode for the certain channel associated with the repeater mode, or for placing the forwarder 107 into the router mode for the certain channel associated with the router mode.

For example, the certain channel for transmitting in the repeater mode may be a certain time slot, or the certain channel for transmitting in the router mode may be a further time slot. The controller 109 is preferably configured for placing the forwarder 107 into the repeater mode during the time slot, or for placing the forwarder 107 into the router mode during the further time slot.

In accordance with a further aspect of the present invention, an initial mode of the forwarder 107 is always the router mode. In this case, no additional information on switching into the router mode is necessary since, after having transmitted in repeater mode within e.g. a reserved time slot, the forwarder 107 may be configured for returning back to the initial mode, i.e. to the router mode.

In accordance with a further aspect of the present invention, the channel for transmitting in the repeater mode is a certain band pass region associated with a certain bandwidth, and/or the channel for transmitting in the router mode is a further band pass region associated with a further bandwidth. The controller 109 may in this case be formed for placing the forwarder 107 into the repeater mode for a certain band pass region and/or for placing the forwarder 107 into the router mode for the further band pass region.

In order to extract the certain band pass region reserved for transmission in the repeater mode and/or in order to extract the further certain band pass region reserved for transmission in the router mode, the apparatus for transmitting may comprise a tuneable filter or a plurality of filters.

In accordance with a further aspect of the present invention, the inventive apparatus for transmitting is configured for transmitting and/or receiving multi-carrier signals, for example signals being modulated in accordance with the orthogonal frequency division multiplexing scheme (OFDM). For example, the apparatus 101 for transmitting comprises in this case a Fourier transformer for transforming a time domain signal into frequency domain for separating signals to be transmitted in the repeater mode or for separating signals to be transmitted in the router mode. After having separated the signals in frequency domain, the signals to be transmitted in the repeater mode can be amplified and transformed back to time domain (or vice versa) using, for example, an inverse Fourier transformer, whereas signals, i.e. frequency carriers, to be routed, may be processed further in the frequency domain.

Generally speaking, the data signal may comprise a first data signal to be transmitted in the repeater mode, and a second data signal to be transmitted in the router mode. The controller 109 is in this case configured for placing the forwarder into the repeater mode for transmitting the first data signal in the repeater mode, and for placing the forwarder into the router mode for transmitting the second data signal in the router mode. In the case of multi-carrier signals, the controller 109 may receive control information indicating the set of sub-carriers for repeating and a further set of sub-carriers for routing (first data signal and second data signal). However, the first data signal and the second data signal may be concatenated time domain signals, which are comprised by the data signal. In this case, the controller 109 is formed for performing a timing control for placing the forwarder 107 e.g. into the repeater mode during certain time intervals.

According to a further aspect of the present invention, the apparatus for transmitting may further comprise means for generating network control information indicating a certain channel for transmitting the data signal in the repeater mode and/or indicating a further channel, e.g. a time slot, for transmitting the data signal in the router mode. Preferably, the apparatus for transmitting is configured for transmitting the network control information over the communication network to other network nodes not being involved in transmission of the data signal for prompting the other network nodes not to transmit on the certain channel in order to avoid inferences. To do so, the apparatus for transmitting may further comprise a transmitter for transmitting signals, e.g. the data signal or the network control signal or other signals over the communication network.

If the data signal is to be transmitted to the remote receiver through a certain communication network path including an intermediate network node being arranged between the apparatus for transmitting and the remote receiver, wherein the data signal is to be transmitted in the repeater mode, then the apparatus for transmitting may be formed for transmitting a network control information to the intermediate network node for placing the intermediate network node into the repeater mode. In other words, the inventive apparatus for transmitting may control the intermediate mode in order to adjust the repeater mode for at least a part of the certain communication network path, i.e. only for some network nodes.

The network control information may further comprise a channel reservation information indicating a certain channel, e.g. certain time slots or certain base band region, reserved for transmitting in the repeater mode, wherein the apparatus for transmitting may be configured for generating the network control information or for receiving same over the communication network from, for example, the remote transmitter 105.

For generating the network control information, the apparatus may comprise means for generating the network control information. The means for generating the network control information may be further configured for deriving the network control information from the control information or for deriving the network control information from the data signal in dependence on a requirement associated with the data signal, e.g. in dependence of a maximum tolerable transmission delay associated with for example video transmission.

The apparatus for transmitting may further comprise means for determining a communication path through the communication network. The means for determining may be formed for performing routing algorithms in order to find a suitable route through the communication network. In addition, the means for determining may be configured for determining the communication path such that a maximum tolerable delay associated with the transmission of the data signal over the communication path is not exceeded. For example, the maximum tolerable transmission delay is less than 30ms.

Moreover, during the process of determining the communication path, the means for determining may take into account that intermediate network nodes may selectively be switched into the repeater mode for reducing delays. For example, the means for determining is configured for determining an intermediate network node being arranged along the communication path, the intermediate network node to be placed into the repeater mode for reducing transmission delay.

Generally, the present invention introduces an additional degree of freedom in determining an optimum communication path through the communication network since, in addition, the adaptivity of network nodes, i.e. the possibility of selectively placing the network nodes into the repeater mode or into the router mode can additionally be exploited by the means for determining the communication path. Therefore, both: reducing a transmission delay and reducing packet loss rate may jointly be achieved.

For example, the data signal may comprise data requiring low transmission delay, e.g. video data. In this case, the means for determining the communication path may be configured for generating the control information indicating the repeater mode for reducing transmission delay. In other words, the apparatus for transmitting may be configured for adaptively deciding whether repeater or router mode is to be adjusted. In addition, the control information indicating the repeater mode can be transmitted to other network nodes in order to set up the repeater mode channel.

Generally speaking, the present invention further provides a method for transmitting a data signal, the method comprising receiving a control information and, in response to the control information, repeating the data signal, or routing the data signal, as has been described above. Moreover, the above-described functionalities and scenarios also refer to corresponding methods.

In addition, the present invention provides a method for delivering a data signal through a communication path between a transmitter and a receiver, the transmitter and the receiver being connected via a communication network having an intermediate network node. The intermediate network node may be arranged to be placed into a repeater mode or into a router mode, as has been described above. The method comprises providing a network control information indicating the repeater mode and/or the router mode, transmitting the network control information to the intermediate network node, in response to the control information, placing the intermediate network node into the repeater mode for repeating the data signal received from the transmitter to the remote receiver or for repeating the data signal to a further intermediate network node, or for placing the intermediate network node into the router mode for routing the data signal received from the transmitter to the remote receiver or to a further intermediate network node.

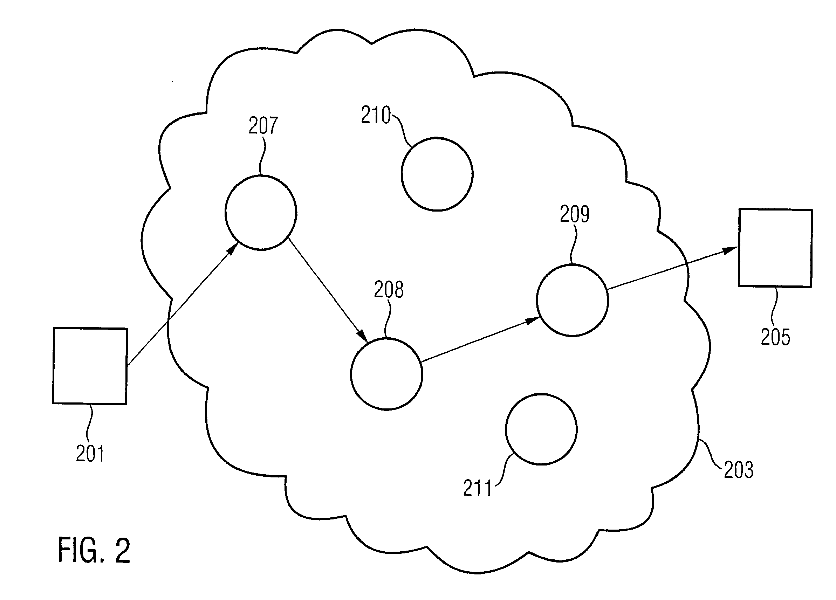

Fig. 2 demonstrates the inventive scenario, in which a transmitter 201 transmits a data signal over a communication network 203 to the remote receiver 205. The communication network 203 comprises a plurality of network nodes 207 to 211, wherein the network nodes 207, 208, and 209 are arranged along the communication path through the communication network, via which path the data signal is to be transmitted. For example, the network nodes 207, 208, and 209 are switched into the repeater mode during a certain time slot for transmitting in the repeater mode. The other network nodes, 201 and 211, are not involved in the transmission of the data signal. Therefore, if the nodes 207, 208, and 209 are switched to repeating, the other network nodes 201 and 211 are preferably placed into the waiting state for not transmitting information to any of the nodes 207, 208, and 209 during the certain time slot in order to avoid interferences.

In order to establish the communication path depicted in Fig. 2, the methods may comprise reserving network resources, e.g. certain time slots, for repeating the data signal. The method may further comprise reserving of a channel for repeating the data signal, wherein a certain time slot or a certain band pass region associated with a certain bandwidth may be reserved as the channel.

The method may further comprise providing the network control information further indicating the channel reserved for repeating the data signal to, for example, a network node being arranged along the communication path for placing same into the repeater mode. The method may further comprise receiving acknowledgement information indicating reception of the control information by the intermediate network node.

In addition, the method may comprise transmitting the data signal by the transmitter 201 in response to the acknowledgement information.

Furthermore, the method may comprise automatically placing the intermediate network node into the router mode after repeating the data signal in the repeater mode during, for example, the reserved time slot for repeating.

As is depicted in Fig. 2, the communication network may comprise a further intermediate network node, for example the network node 209, being arranged along the communication path, the further intermediate network node being arranged to be placed into a repeater mode or to be placed into a router mode. The method may further comprise providing a further network control information indicating the repeater mode or the router mode to the further intermediate network node, transmitting the further network control information to the further intermediate network node, in response to the control information, placing the further intermediate network node in the repeater mode for repeating the data signal received from the transmitter or from the intermediate network node to the receiver or to another intermediate network node, or placing the further intermediate network node in the router mode for routing the data signal received from the transmitter or from the intermediate network node to the receiver or to another intermediate network node.

In addition, the method may comprise determining the communication path comprising the intermediate network node for delivering the data signal in the repeater mode. Particularly, the communication path may be determined using the inventive concept described above.

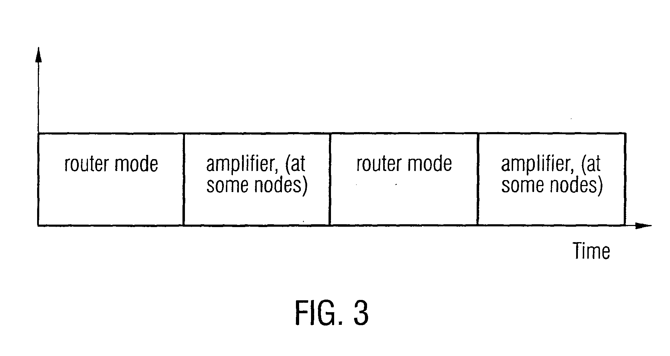

In accordance with the present invention, separation of physical layers for the two modes and allocating resources for each mode are provided. In the following, it is assumed by the way of example only,that time slots are used for each mode, as is depicted in Fig. 3. For example, in a first time slot, the router mode is adjusted. In the following time slot, amplifying at least at some nodes can be performed. Thereafter, router modes can again be adjusted and so forth.

It is to be noted that the time slot management is depicted in Fig. 3 by the way of example only. As has been described above, also other ways are possible, for example, exploiting different spectral regions.

Prior to transmitting, it is to be determined, which node act in which mode for which receiver and at which time slot. In the following it is assumed that the control signalling is performed over the router mode. In this case, the following high-level algorithm can be performed:
1. Node A requests an amplifier time slot link from an access point;
2. Determine a path from the access point to node A;
3. All nodes on the path must accept the request for a time slot;
4. All other nodes must be instructed about the reserved time slot and shall not sent in this slot; This may also include newly incoming nodes.
5. Usage of both modus can start.
6. Tear down of reservation.

It should be noted that the path of step 2 may not be identical to the path of the routing protocol used in the ad-hoc, routed network. It should preferably be assured that the signal is amplified in a suitable way.

For steps 4 and 6, a distributed virtual circuit medium access scheme can be configured, as is described in A. Carlson et al., (Distributed allocation of time slots for real-time traffic in a wireless multi-hop network). Instead of reserving time slots, the amplifier mode (repeater mode) can be reserved.

A further issue is mobility in the network. The inventive approach provides an ad-hoc routing protocol realising changes in the topology and finding new routes. Then, the new route has to be installed as the above initial set-up.

In order to simplify step 4, it is possible to pre-allocate specific slots for routing mode. While this may not be fully flexible regarding bandwidth, it simplifies the control. In particular, it is then possible that newly incoming nodes contact the access point in such a routing mode time slot and ask for allocated time slots. This is similar to an initial signalling time slot.

In step 5, all nodes which can interfere with some amplifier nodes (and the receiving node) shall not send data in the reserved mode. Other communication can continue as usual.

Regarding the step 6, tear down is analogues to the set up phase.

The present invention provides a new kind of multi-hop access networks, which can flexibly support both a low-delay virtual connection over multiple hops to an access point and locally controlled data services. In summery, the benefits are associated with providing services with low-delay and quality of service in multi-hop access networks, flexible usage of time slots/resources depending on traffic needs, usage of common protocols for carrying signalling which is cost-effective, compatible etc. Moreover, for example in the routing mode, common MAC, e.g. WLAN 802.11 MAC can be used for a local medium access between ad-hoc routers. Moreover, a local control and local communication in router mode can be permitted. Additionally, a better through put in the amplifier mode compared to the router mode can be achieved.

An important extension is to consider mobility of the mobile node in the case of for example wireless ad-hoc networks. In this case, an existing reservation path may have to be changed to another route. This means that a movement is to be detected, e.g. via the routing protocol, that a new route is to be determined and that the reservation at the new route is being installed. This can be performed similar to other approaches handling mobility in multi-hop access networks, however, in accordance with the present invention, the reservation can be changed as well.

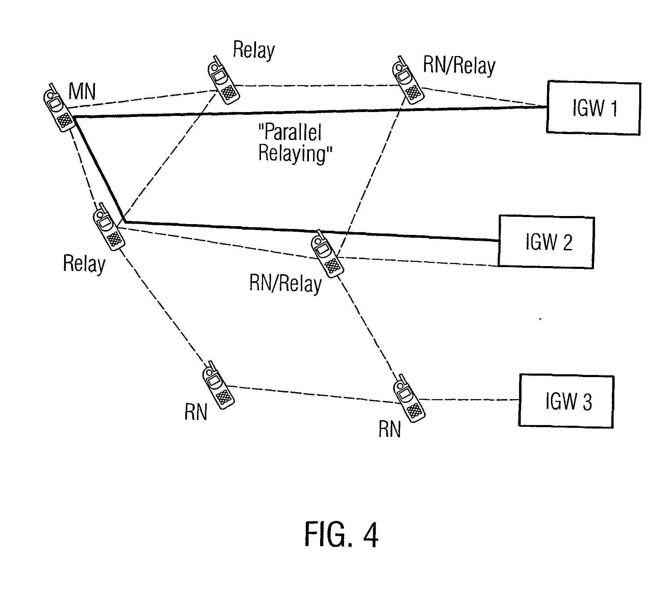

Fig. 4 demonstrates a communication network in accordance with a further embodiment of the present invention. The communication network shown in Fig. 4 comprises a mobile node (MN), a plurality of relay nodes (RN) for parallel relaying, i.e. repeating, and a plurality of receivers which are internet gateways (IGW) in this case.

As is depicted in Fig. 4, several amplifying nodes can be employed for parallel relaying in order to exploit spatial diversity in such a network. The communication network set-up can be performed as has been described above. The difference is, that more nodes on several paths are to be reconfigured. The main advantage of the approach depicted in Fig. 4 is a more robust and reliable communication over several paths.

Depending on certain implementation requirements, the inventive methods can be implemented in hardware or in software. The implementation can be performed using a digital storage medium, in particular a disk or a CD having electronically readable control signals, which can cooperate with a programmable computer system such that the inventive methods are performed. Generally, the present invention is, therefore, a computer-program product with a program code stored on a machine-readable carrier, the program code being formed for performing the inventive methods when the computer program product runs on a computer. In other words, the inventive methods are, therefore, a computer program having a program code for performing the inventive methods when the computer program runs on a computer.

## Claims

1. Apparatus (101) for transmitting a data signal over a communication network to a remote receiver (103), the apparatus comprising:
a forwarder (107) being configured to be placed into a repeater mode for repeating the data signal, or to be placed into a router mode for routing the data signal, wherein, in the routing mode, the forwarder (107) is configured for routing the data signal to a next network node in accordance with a connection-less routing policy, or for routing the data signal to a next network node in accordance with a connection-oriented routing policy; and
a controller (109) being configured for receiving control information and for placing the forwarder (107) into the repeater mode or into the router mode in dependence on the control information.

2. Apparatus according to claim 1, wherein the forwarder (107) is configured for amplifying the data signal in the repeater mode.

3. Apparatus according to claim 1 or 2, wherein the data signal is a band pass signal occupying a band pass spectral region, and wherein the forwarder (107) is configured for amplifying the data signal in the band pass spectral region.

4. Apparatus according to any of the preceding claims 1 to 3, wherein the data signal is a band pass signal occupying a band pass spectral region, wherein the forwarder (107) is configured for down-converting the data signal into a base band to obtain a base band data signal, for equalizing the base band data signal to obtain an equalized base band data signal, and for up-converting the equalized data signal into the band pass spectral region for transmission.

5. Apparatus according to any of the preceding claims 1 to 4, wherein the forwarder (107) comprises a routing table comprising a network address of a network node to which the data signal is to be routed in the routing mode.

6. Apparatus according to any of the preceding claims 1 to 5, wherein, in the routing mode, the forwarder (107) is configured for analysing a network destination address attached to the data signal and for attaching a network address of a next network node, to which the data signal is to be routed, to the data signal.

7. Apparatus according to any of the preceding claims 1 to 6, wherein the data signal is a base band signal,
wherein, in the routing mode, the forwarder (107) is configured for down-converting the data signal to obtain a base band data signal, for equalizing the data signal to obtain an equalized data signal, for forward error correction decoding the equalized data signal to obtain a decoded data signal, for re-encoding the decoded data signal and for up-converting a re-encoded data signal.

8. Apparatus according to any of the preceding claims 1 to 7, wherein the forwarder (107) comprises a repeater means for repeating the data signal in the repeater mode, a router means for routing the data signal in the router mode, and a switch for switching the data signal to the repeater means or for switching the data signal to the router means, wherein the controller (109) is configured for controlling a switching operation of the switch.

9. Apparatus according to any of the preceding claims 1 to 8, further comprising a receiver for receiving the data signal.

10. Apparatus according to claim 9, wherein a remote transmitter (105) is configured for transmitting the control information over the communication network, wherein the receiver is configured for receiving a receivable version of the control information, detecting the control information in the receivable version, and for providing control information to the forwarder (107).

11. Apparatus according to claim 9 or 10, wherein the remote transmitter (105) is configured for transmitting a composite signal comprising the data signal and the control information, wherein the receiver is configured for detecting the control information in a receivable version of the composite signal.

12. Apparatus according to any of claims 9 to 11, wherein the remote transmitter (105) is configured for transmitting a network control information indicating that a further transmitter which is in the range of the apparatus for transmitting is formed for transmitting a further data signal in a repeater mode within a reserved time slot, wherein the receiver is configured for detecting the network control information, and wherein the controller (109) is configured for placing the forwarder (107) into a wait state during the reserved time slot in response to the network control information in order to avoid disturbing the further transmitter.

13. Apparatus according to any of claims 9 to 12, wherein the remote transmitter (105) is configured for transmitting path information on a path through the communication network to the remote receiver (103), wherein the receiver is formed for detecting the path information and for providing the path information to the forwarder (107) for routing.

14. Apparatus according to any of the preceding claims 1 to 13, wherein the control information indicates a certain channel for transmitting the data signal in the repeater mode or a certain channel for transmitting the data signal in the router mode, wherein the controller (109) is configured for placing the forwarder (107) into the repeater mode for the certain channel associated with the repeater mode, or for placing the forwarder (107) into the router mode for the certain channel associated with the router mode.

15. Apparatus according to claim 4, wherein the certain channel for transmitting in the repeater mode is a certain time slot, or wherein the certain channel for transmitting in the router mode is a further time slot, wherein the controller (109) is configured for placing the forwarder into the repeater mode during the time slot, or for placing the forwarder into the router mode during the further time slot.

16. Apparatus according to any of claims 14 or 15, wherein the channel for transmitting in the repeater mode is a certain band pass region associated with a certain bandwidth, or wherein the channel for transmitting in the router mode is a further band pass region associated with a further band width, wherein the controller (109) is configured for placing the forwarder (107) into the repeater mode for the further band pass region, or for placing the forwarder into the router mode for the further band pass region.

17. Apparatus according to any of the claims 1 to 16, wherein the data signal comprises a first data signal to be transmitted in the repeater mode and a second data signal to be transmitted in the router mode, wherein the controller (109) is configured for placing the forwarder (107) into the repeater mode for transmitting the first data signal in the repeater mode, and for placing the forwarder (107) into the router mode for transmitting the second data signal in the router mode.

18. Apparatus according to any of the preceding claims 1 to 17, further comprising means for generating network control information indicating a certain channel for transmitting the data signal in the repeater mode, wherein the apparatus for transmitting is configured for transmitting the network control information over the communication network to other network nodes not being involved in the transmission of the data signal for prompting the other network nodes not to transmit on the certain channel in order to avoid interferences.

19. Apparatus according to any of the preceding claims 1 to 18, further comprising a transmitter for transmitting signals over the communication network.

20. Apparatus according to any of the preceding claims 1 to 19, wherein the data signal is to be transmitted to the remote receiver (103) through a certain communication network path, wherein the certain communication network path includes an intermediate network node being arranged between the apparatus for transmitting and the remote receiver (103), wherein the data signal is to be transmitted in the repeater mode, and wherein the apparatus for transmitting is configured for generating a network control information indicating the repeater mode, and for transmitting the network control information to the intermediate network node for placing the intermediate network node into the repeater mode.

21. Apparatus according to claim 20, wherein the network control information comprises channel reservation information, the channel reservation information indicating a certain channel to be reserved for transmitting in the repeater mode.

22. Apparatus according to claim 21, wherein the certain channel is a certain time slot or a certain band pass region.

23. Apparatus according to any of claims 20 to 22, comprising means for generating the network control information.

24. Apparatus according to any of the preceding claims 1 to 13, further comprising means for determining a communication path through the communication network to the receiver.

25. Apparatus according to claim 24, wherein the communication path includes an intermediate network node being arranged between the apparatus for transmitting and the remote receiver (103), and wherein the means for determining is configured for determining routing information for routing the data signal, the routing information including a network address of the intermediate network node.

26. Apparatus according to claim 24 or 25, wherein the means for determining is configured for determining the communication path such that a maximum tolerable delay associated with the transmission of the data signal over the communication path is not exceeded.

27. Apparatus according to claim 26, wherein the means for determining is configured for determining an intermediate network node being arranged along the communication path, the intermediate network node to be placed into the repeater mode for reducing transmission delay.

28. Apparatus according to any of the preceding claims 1 to 27, further comprising means for deriving the control information from the data signal.

29. Method for transmitting a data signal over a communication network to a remote receiver (103), comprising:
receiving control information by a controller (109) being configured to receive the control information and to place a forwarder (107) in a router mode or a repeater mode; and
in response to the control information, repeating the data signal, or routing the data signal by the forwarder (107) being configured to be placed into the repeater mode for repeating the data signal or to be placed into the router mode for routing the data signal, wherein, when routing the data signal, the data signal is routed to a next network node in accordance with a connection-less routing policy, or the data signal is routed to a next network node in accordance with a connection-oriented routing policy.

30. Method of claim 29, wherein the communication network includes a communication path between a transmitter (105) and the remote receiver (103), the transmitter (105) and the remote receiver (103) being connected via the communication network, the communication network additionally comprising an intermediate network node (101), the intermediate network node (101) being arranged to be placed in a repeater mode or in a router mode, the method further comprising the following steps:
providing network control information indicating the repeater mode or indicating the router mode;
transmitting the network control information to the intermediate network node (101);
wherein the step of receiving and repeating or routing the data signal is performed in the intermediate network node (101).

31. Method according to claim 30, comprising reserving network resources for repeating the data signal.

32. Method according to claim 30 or 31, comprising reserving a channel for repeating the data signal.

33. Method according to claim 32, comprising reservation of a certain time slot as the channel or reservation of a certain band pass region associated with a certain band width as the channel.

34. Method according to claim 32 or 33, comprising providing the network control information to the intermediate network node (101) further indicating the channel reserved for repeating the data signal.

35. Method according to any of claims 30 to 34, comprising receiving acknowledgement information indicating reception of the control information by the intermediate network node (101).

36. Method according to claim 35, comprising transmitting the data signal by the transmitter in response to the acknowledgement information.

37. Method according to any of claims 30 to 36, comprising automatically placing the intermediate network node (101) into the router mode after repeating the data signal in the repeater mode.

38. Method according to any of claims 30 to 36, wherein the communication network comprises a further intermediate network node being arranged along the communication path, the further intermediate network node being arranged to be placed into a repeater mode or to be placed into a router mode, the method comprising:
providing further network control information indicating the repeater mode or the router mode;
transmitting the further network control information to the further intermediate network node;
in response to the control information, placing the further intermediate network node into the repeater mode for repeating the data signal received from the transmitter or from the intermediate network node (101) to the remote receiver (103) or to another intermediate network node, or placing the further intermediate network node into the router mode for routing the data signal received from the transmitter or from the intermediate network node (101) to the remote receiver (103) or to another intermediate network node.

39. Method according to any of claims 30 to 38, comprising determining the communication path, the communication path comprising the intermediate network node (101) to be placed into the repeater mode.

40. Computer program for performing the methods according to any of claims 30 to 39, when the computer program runs on a computer.

## Patentansprüche

1. Vorrichtung (101) zum Übertragen eines Datensignals über ein Kommunikationsnetzwerk zu einem entfernten Empfänger (103), wobei die Vorrichtung folgende Merkmale aufweist:
einen Übermittler (107), der konfiguriert ist, um in einen Repeater-Modus zum Verstärken des Datensignals platziert zu sein, oder um in einen Router-Modus zum Routen des Datensignals platziert zu sein, wobei der Übermittler (107) in dem Routing-Modus zum Routen des Datensignals zu einem nächsten Netzwerkknoten gemäß einer verbindungslosen Routing-Taktik oder zum Routen des Datensignals zu einem nächsten Netzwerkknoten gemäß einer verbindungsorientierten Routing-Taktik konfiguriert ist; und
eine Steuerung (109), die zum Empfangen von Steuerinformationen und zum Platzieren des Übermittlers (107) in den Repeater-Modus oder in den Router-Modus, abhängig von den Steuerinformationen, konfiguriert ist.

2. Vorrichtung gemäß Anspruch 1, bei der der Übermittler (107) zum Verstärken des Datensignals in dem Repeater-Modus konfiguriert ist.

3. Vorrichtung gemäß Anspruch 1 oder 2, bei der das Datensignal ein Bandpasssignal ist, das eine Bandpassspektralregion einnimmt, und bei der der Übermittler (107) zum Verstärken des Datensignals in der Bandpassspektralregion konfiguriert ist.

4. Vorrichtung gemäß einem der vorangehenden Ansprüche 1 bis 3, bei der das Datensignal ein Bandpasssignal ist, das eine Bandpassspektralregion einnimmt, wobei der Übermittler (107) zum Heruntermischen des Datensignals in ein Basisband, um ein Basisbanddatensignal zu erhalten, zum Entzerren des Basisbanddatensignals, um ein entzerrtes Basisbanddatensignal zu erhalten, und zum Aufwärtsmischen des entzerrten Datensignals in die Bandpassspektralregion zur Übertragung konfiguriert ist.

5. Vorrichtung gemäß einem der vorangehenden Ansprüche 1 bis 4, bei der der Übermittler (107) eine Routing-Tabelle aufweist, die eine Netzwerkadresse eines Netzwerkknotens aufweist, zu dem das Datensignal in dem Routing-Modus geroutet werden soll.

6. Vorrichtung gemäß einem der vorangehenden Ansprüche 1 bis 5, bei der der Übermittler (107) in dem Routing-Modus zum Analysieren einer Netzwerkzielortadresse, die an das Datensignal angebracht ist, und zum Anbringen einer Netzwerkadresse eines nächsten Netzwerkknotens, zu der das Datensignal geroutet werden soll, an das Datensignal, konfiguriert ist.

7. Vorrichtung gemäß einem der vorangehenden Ansprüche 1 bis 6, bei der das Datensignal ein Basisbandsignal ist, bei der der Übermittler (107) in dem Routing-Modus zum Abwärtsmischen des Datensignals, um ein Basisbanddatensignal zu enthalten, zum Entzerren des Datensignals, um ein entzerrtes Datensignal zu erhalten, für eine Vorwärtsfehlerkorrekturdecodierung des entzerrten Datensignals, um ein decodiertes Datensignal zu erhalten, zum Neucodieren des decodierten Datensignals und zum Aufwärtsmischen eines neucodierten Datensignals konfiguriert ist.

8. Vorrichtung gemäß einem der vorangehenden Ansprüche 1 bis 7, bei der der Übermittler (107) eine Repeater-Einrichtung zum Verstärken des Datensignals in dem Repeater-Modus, eine Router-Einrichtung zum Routen des Datensignals in dem Router-Modus und einen Schalter zum Schalten des Datensignals zu der Repeater-Einrichtung oder zum Schalten des Datensignals zu der Router-Einrichtung aufweist, wobei die Steuerung (109) zum Steuern einer Schaltoperation des Schalters konfiguriert ist.

9. Vorrichtung gemäß einem der vorangehenden Ansprüche 1 bis 8, die ferner einen Empfänger zum Empfangen des Datensignals aufweist.

10. Vorrichtung gemäß Anspruch 9, bei der ein entfernter Sender (105) zum Übertragen der Steuerinformationen über das Kommunikationsnetzwerk konfiguriert ist, wobei der Empfänger zum Empfangen einer empfangbaren Version der Steuerinformationen, zum Erfassen der Steuerinformationen in der empfangbaren Version und zum Liefern von Steuerinformationen zu dem Übermittler (107) konfiguriert ist.

11. Vorrichtung gemäß Anspruch 9 oder 10, bei der der entfernte Sender (105) zum Übertragen eines zusammengesetzten Signals konfiguriert ist, das das Datensignal und die Steuerinformationen aufweist, wobei der Empfänger zum Erfassen der Steuerinformationen in einer empfangbaren Version des zusammengesetzten Signals konfiguriert ist.

12. Vorrichtung gemäß einem der Ansprüche 9 bis 11, bei der der entfernte Sender (105) zum Übertragen von Netzwerksteuerinformationen konfiguriert ist, die anzeigt, dass ein weiterer Sender, der in dem Bereich der Vorrichtung zum Übertragen ist, gebildet ist zum Übertragen eines weiteren Datensignals in einem Repeater-Modus innerhalb eines reservierten Zeitschlitzes, wobei der Empfänger zum Erfassen der Netzwerksteuerinformationen konfiguriert ist, und wobei die Steuerung (109) zum Platzieren des Übermittlers (107) in einen Wartezustand während des reservierten Zeitschlitzes ansprechend auf die Netzwerksteuerinformationen konfiguriert ist, um ein Stören des weiteren Senders zu vermeiden.

13. Vorrichtung gemäß einem der Ansprüche 9 bis 12, bei der der entfernte Sender (105) konfiguriert ist zum Übertragen von Weginformationen auf einem Weg durch das Kommunikationsnetzwerk zu dem entfernten Empfänger (103), wobei der Empfänger zum Erfassen der Weginformationen und zum Liefern der Weginformationen zu dem Übermittler (107) zum Routen gebildet ist.

14. Vorrichtung gemäß einem der vorangehenden Ansprüche 1 bis 13, bei der die Steuerinformationen einen bestimmten Kanal zum Übertragen des Datensignals in dem Repeater-Modus oder einen bestimmten Kanal zum Übertragen des Datensignals in dem Router-Modus anzeigen, wobei die Steuerung (109) zum Platzieren des Übermittlers (107) in den Repeater-Modus für den bestimmten Kanal, der dem Repeater-Modus zugeordnet ist, oder zum Platzieren des Übermittlers (107) in den Router-Modus für den bestimmten Kanal, der dem Router-Modus zugeordnet ist, konfiguriert ist.

15. Vorrichtung gemäß Anspruch 4, bei der der bestimmte Kanal zum Übertragen in dem Repeater-Modus ein bestimmter Zeitschlitz ist, oder bei dem der bestimmte Kanal zum Übertragen in dem Router-Modus ein weiterer Zeitschlitz ist, wobei die Steuerung (109) zum Platzieren des Übermittlers in den Repeater-Modus während des Zeitschlitzes oder zum Platzieren des Übermittlers in den Router-Modus während des weiteren Zeitschlitzes konfiguriert ist.

16. Vorrichtung gemäß einem der Ansprüche 14 oder 15, bei der der Kanal zum Übertragen in dem Repeater-Modus eine bestimmte Bandpassregion ist, die einer bestimmten Bandbreite zugeordnet ist, oder bei der der Kanal zum Übertragen in dem Router-Modus eine weitere Bandpassregion ist, die einer weiteren Bandbreite zugeordnet ist, wobei die Steuerung (109) zum Platzieren des Übermittlers (107) in den Repeater-Modus für die weitere Bandpassregion, oder zum Platzieren des Übermittlers in den Router-Modus für die weitere Bandpassregion konfiguriert ist.

17. Vorrichtung gemäß einem der Ansprüche 1 bis 16, bei der das Datensignal ein erstes Datensignal, das in dem Repeater-Modus übertragen werden soll, und ein zweites Datensignal, das in dem Router-Modus übertragen werden soll, aufweist, wobei die Steuerung zum Platzieren des Übermittlers (107) in den Repeater-Modus zum Übertragen des ersten Datensignals in dem Repeater-Modus, und zum Platzieren des Übermittlers (107) in den Router-Modus zum Übertragen des zweiten Datensignals in dem Router-Modus konfiguriert ist.

18. Vorrichtung gemäß einem der vorangehenden Ansprüche 1 bis 17, die ferner eine Einrichtung aufweist zum Erzeugen von Netzwerksteuerinformationen, die einen bestimmten Kanal zum Übertragen des Datensignals in dem Repeater-Modus anzeigen, wobei die Vorrichtung zum Übertragen zum Übertragen der Netzwerksteuerinformationen über das Kommunikationsnetzwerk zu anderen Netzwerkknoten konfiguriert ist, die nicht an der Übertragung des Datensignals beteiligt sind, um die anderen Netzwerkknoten aufzufordern, nicht auf dem bestimmten Kanal zu übertragen, um Störungen zu vermeiden.

19. Vorrichtung gemäß einem der vorangehenden Ansprüche 1 bis 18, die ferner einen Sender zum Übertragen von Signalen über das Kommunikationsnetzwerk aufweist.

20. Vorrichtung gemäß einem der vorangehenden Ansprüche 1 bis 19, bei der das Datensignal zu dem entfernten Empfänger (103) durch einen bestimmten Kommunikationsnetzwerkweg übertragen werden soll, wobei der bestimmte Kommunikationsnetzwerkweg einen Zwischennetzwerkknoten umfasst, der zwischen der Vorrichtung zum Übertragen und dem entfernten Empfänger (103) angeordnet ist, wobei das Datensignal in dem Repeater-Modus übertragen werden soll, und wobei die Vorrichtung zum Übertragen zum Erzeugen von Netzwerksteuerinformatio nen, die den Repeater-Modus anzeigen, und zum Übertragen der Netzwerksteuerinformationen zu dem Zwischennetzwerkknoten zum Platzieren des Zwischennetzwerkknotens in den Repeater-Modus konfiguriert ist.

21. Vorrichtung gemäß Anspruch 20, bei der die Netzwerksteuerinformationen Kanalreservierungsinformationen aufweisen, wobei die Kanalreservierungsinformationen einen bestimmten Kanal anzeigen, der zum Übertragen in dem Repeater-Modus reserviert sein soll.

22. Vorrichtung gemäß Anspruch 21, bei der der bestimmte Kanal ein bestimmter Zeitschlitz oder eine bestimmte Bandpassregion ist.

23. Vorrichtung gemäß einem der Ansprüche 20 bis 22, die eine Einrichtung zum Erzeugen der Netzwerksteuerinformationen aufweist.

24. Vorrichtung gemäß einem der vorangehenden Ansprüche 1 bis 13, die ferner eine Einrichtung zum Bestimmen eines Kommunikationswegs durch das Kommunikationsnetzwerk zu dem Empfänger aufweist.

25. Vorrichtung gemäß Anspruch 24, bei der der Kommunikationsweg einen Zwischennetzwerkknoten umfasst, der zwischen der Vorrichtung zum Übertragen und dem entfernten Empfänger (103) angeordnet ist, wobei die Einrichtung zum Bestimmen konfiguriert ist zum Bestimmen von Routing-Informationen zum Routen des Datensignals, wobei die Routing-Informationen eine Netzwerkadresse des Zwischennetzwerkknotens umfassen.

26. Vorrichtung gemäß Anspruch 24 oder 25, bei der die Einrichtung zum Bestimmen zum Bestimmen des Kommunikationswegs konfiguriert ist, derart, dass eine maximal tolerierbare Verzögerung, die der Übertragung des Datensignals über den Kommunikationsweg zugeordnet ist, nicht überschritten wird.

27. Vorrichtung gemäß Anspruch 26, bei der die Einrichtung zum Bestimmen zum Bestimmen eines Zwischennetzwerkknotens konfiguriert ist, der entlang dem Kommunikationsweg angeordnet ist, wobei der Zwischennetzwerkknoten zum Reduzieren einer Übertragungsverzögerung in den Repeater-Modus platziert sein soll.

28. Vorrichtung gemäß einem der vorangehenden Ansprüche 1 bis 27, die ferner eine Einrichtung zum Herleiten der Steuerinformationen aus dem Datensignal aufweist.

29. Verfahren zum Übertragen eines Datensignals über ein Kommunikationsnetzwerk zu einem entfernten Empfänger (103), das folgende Schritte aufweist:
Empfangen von Steuerinformationen durch eine Steuerung (109), die konfiguriert ist, um die Steuerinformationen zu empfangen und einen Übermittler (107) in einen Router-Modus oder einen Repeater-Modus zu setzen; und
ansprechend auf die Steuerinformationen, Verstärken des Datensignals oder Routen des Datensignals durch den Übermittler (107), der konfiguriert ist, um zum Verstärken des Datensignals in den Repeater-Modus platziert zu werden, oder zum Routen des Datensignals in den Router-Modus platziert zu werden, wobei, wenn das Datensignal geroutet wird, das Datensignal zu einem nächsten Netzwerkknoten gemäß einer verbindungslosen Routing-Taktik geroutet wird, oder das Datensignal zu einem nächsten Netzwerkknoten gemäß einer verbindungsorientierten Routing-Taktik geroutet wird.

30. Verfahren gemäß Anspruch 29, bei dem das Kommunikationsnetzwerk einen Kommunikationsweg zwischen einem Sender (105) und dem entfernten Empfänger (103) umfasst, wobei der Sender (105) und der entfernte Empfänger (103) über das Kommunikationsnetzwerk verbunden sind, wobei das Kommunikationsnetzwerk zusätzlich einen Zwischennetzwerkknoten (101) aufweist, wobei der Zwischennetzwerkknoten (101) angeordnet ist, um in einen Repeater-Modus oder in einen Router-Modus gesetzt zu werden, wobei das Verfahren ferner folgende Schritte aufweist:
Liefern von Netzwerksteuerinformationen, die den Repeater-Modus anzeigen oder den Router-Modus anzeigen;
Übertragen der Netzwerksteuerinformationen zu dem Zwischennetzwerkknoten (101);
wobei der Schritt des Empfangens und Verstärkens oder Routens des Datensignals in dem Zwischennetzwerkknoten (101) ausgeführt wird.

31. Verfahren gemäß Anspruch 30, das das Reservieren von Netzwerkressourcen zum Verstärken des Datensignals aufweist.

32. Verfahren gemäß Anspruch 30 oder 31, das das Reservieren eines Kanals zum Verstärken des Datensignals aufweist.

33. Verfahren gemäß Anspruch 32, das die Reservierung eines bestimmten Zeitschlitzes als den Kanal, oder die Reservierung einer bestimmten Bandpassregion, die einer bestimmten Bandbreite zugeordnet ist, als den Kanal, aufweist.

34. Verfahren gemäß Anspruch 32 oder 33, das das Liefern der Netzwerksteuerinformationen zu dem Zwischennetzwerkknoten (101) aufweist, die ferner den Kanal anzeigen, der zum Verstärken des Datensignals reserviert ist.

35. Verfahren gemäß einem der Ansprüche 30 bis 34, das das Empfangen von Bestätigungsinformationen aufweist, die den Empfang der Steuerinformationen durch den Zwischennetzwerkknoten (101) anzeigen.

36. Verfahren gemäß Anspruch 35, das das Übertragen des Datensignals durch den Sender ansprechend auf die Bestätigungsinformationen aufweist.

37. Verfahren gemäß einem der Ansprüche 30 bis 36, das das automatische Platzieren des Zwischennetzwerkknotens (101) in den Router-Modus nach dem Verstärken des Datensignals in dem Repeater-Modus aufweist.

38. Verfahren gemäß einem der Ansprüche 30 bis 36, bei dem das Kommunikationsnetzwerk einen weiteren Zwischennetzwerkknoten aufweist, der entlang dem Kommunikationsweg angeordnet ist, wobei der weitere Zwischennetzwerkknoten angeordnet ist, um in einen Repeater-Modus gesetzt zu werden, oder in einem Router-Modus gesetzt zu werden, wobei das Verfahren folgende Schritte aufweist:
Liefern weiterer Netzwerksteuerinformationen, die den Repeater-Modus oder den Router-Modus anzeigen;
Übertragen der weiteren Netzwerksteuerinformationen zu dem weiteren Zwischennetzwerkknoten;
ansprechend auf die Steuerinformationen, Setzen des weiteren Zwischennetzwerkknotens in den Repeater-Modus zum Verstärken des Datensignals, das von dem Sender oder von dem Zwischennetzwerkknoten (101) empfangen wird, zu dem entfernten Empfänger (103) oder zu einem anderen Zwischennetzwerkknoten, oder Setzen des weiteren Zwischennetzwerkknotens in den Router-Modus zum Routen des Datensignals, das von dem Sender oder von dem Zwischennetzwerkknoten (101) empfangen wird, zu dem entfernten Empfänger (103) oder zu einem anderen Zwischennetzwerkknoten.

39. Verfahren gemäß einem der Ansprüche 30 bis 38, das das Bestimmen des Kommunikationswegs aufweist, wobei der Kommunikationsweg den Zwischennetzwerkknoten (101) aufweist, der in den Repeater-Modus gesetzt werden soll.

40. Computerprogramm zum Ausführen der Verfahren gemäß einem der Ansprüche 30 bis 39, wenn das Computerprogramm auf einem Computer läuft.

## Revendications

1. Dispositif (101) pour transmettre un signal de données, via un réseau de communication, vers un récepteur à distance (103), le dispositif comprenant:
un émetteur (107) configuré pour être placé en un mode répétiteur, pour répéter le signal de données, ou être placé en un mode routeur, pour acheminer le signal de données, dans lequel, en mode routeur, l'émetteur (107) est configuré pour acheminer le signal de données vers un noeud de réseau suivant selon une politique de cheminement sans connexion, ou pour acheminer le signal de données vers un noeud de réseau suivant selon une politique de cheminement orientée sur une connexion; et
un contrôleur (109) configuré pour recevoir des informations de commande et pour placer l'émetteur (107) en mode répétiteur ou en mode routeur en fonction des informations de commande.

2. Dispositif selon la revendication 1, dans lequel l'émetteur (107) est configuré pour amplifier le signal de données en mode répétiteur.

3. Dispositif selon la revendication 1 ou 2, dans lequel le signal de données est un signal passe-bande occupant une région spectrale passe-bande, et dans lequel l'émetteur (107) est configuré pour amplifier le signal de données dans la région spectrale passe-bande.

4. Dispositif selon l'une quelconque des revendications précédentes 1 à 3, dans lequel le signal de données est un signal passe-bande occupant une région spectrale passe-bande, dans lequel l'émetteur (107) est configuré pour convertir le signal de données en abaissement à une bande de base, pour obtenir un signal de données de bande de base, pour égaliser le signal de données de bande de base, pour obtenir un signal de données de bande de base égalisé, et pour convertir le signal de données égalisé en montée à la région spectrale passe-bande, pour transmission.

5. Dispositif selon l'une quelconque des revendications précédentes 1 à 4, dans lequel l'émetteur (107) comprend un tableau d'acheminement comprenant une adresse de réseau d'un noeud de réseau vers lequel le signal de données doit être acheminé en mode routeur.

6. Dispositif selon l'une quelconque des revendications précédentes 1 à 5, dans lequel, en mode routeur, l'émetteur (107) est configuré pour analyser une adresse de destination de réseau associée au signal de données et pour associer au signal de données une adresse de réseau d'un noeud de réseau suivant vers lequel doit être acheminé le signal de données.

7. Dispositif selon l'une quelconque des revendications précédentes 1 à 6, dans lequel le signal de données est un signal de bande de base, dans lequel, en mode routeur, l'émetteur (107) est configuré pour convertir le signal de données en abaissement, pour obtenir un signal de données de bande de base, pour égaliser le signal de données, pour obtenir un signal de données égalisé, pour décoder par correction d'erreur directe le signal de données égalisé, pour obtenir un signal de données décodé, pour recoder le signal de données décodé et pour convertir en montée un signal de données recodé.

8. Dispositif selon l'une quelconque des revendications précédentes 1 à 7, dans lequel l'émetteur (107) comprend un moyen répétiteur pour répéter le signal de données en mode répétiteur, un moyen routeur pour acheminer le signal de données en mode routeur, et un commutateur pour commuter le signal de données vers le moyen répétiteur ou pour commuter le signal de données vers le moyen routeur, dans lequel le contrôleur (109) est configuré pour commander une opération de commutation du commutateur.

9. Dispositif selon l'une quelconque des revendications précédentes 1 à 8, comprenant, par ailleurs, un récepteur pour recevoir le signal de données.

10. Dispositif selon la revendication 9, dans lequel un émetteur à distance (105) est configuré pour transmettre les informations de commande via le réseau de communication, dans lequel le récepteur est configuré pour recevoir une version recevable des informations de commande, détecter les informations de commande dans la version recevable, et pour fournir les informations de commande à l'émetteur (107).

11. Dispositif selon la revendication 9 ou 10, dans lequel l'émetteur à distance (105) est configuré pour transmettre un signal composite comprenant le signal de données et les informations de commande, dans lequel le récepteur est configuré pour détecter les informations de commande dans une version recevable du signal composite.

12. Dispositif selon l'une quelconque des revendications 9 à 11, dans lequel l'émetteur à distance (105) est configuré pour transmettre des informations de commande de réseau indiquant qu'un autre émetteur qui est à la portée du dispositif pour transmettre est réalisé de manière à transmettre un autre signal de données en mode répétiteur dans un intervalle de temps réservé, dans lequel le récepteur est configuré pour détecter les informations de commande de réseau, et dans lequel le contrôleur (109) est configuré pour placer l'émetteur (107) en un état d'attente pendant l'intervalle de temps réservé en réponse aux informations de commande de réseau, afin d'éviter de perturber l'autre émetteur.

13. Dispositif selon l'une quelconque des revendications 9 à 12, dans lequel l'émetteur à distance (105) est configuré pour transmettre les informations sur un trajet, via le réseau de communication, au récepteur à distance (103), dans lequel le récepteur est réalisé de manière à détecter les informations de trajet et à fournir les informations de trajet à l'émetteur (107) pour cheminement.

14. Dispositif selon l'une quelconque des revendications précédentes 1 à 13, dans lequel les informations de commande indiquent un certain canal pour transmettre le signal de données en mode répétiteur ou un certain canal pour transmettre le signal de données en mode routeur, dans lequel le contrôleur (109) est configuré pour placer l'émetteur (107) en mode répétiteur pour le certain canal associé au mode répétiteur, ou pour placer l'émetteur (107) en mode routeur pour le certain canal associé au mode routeur.

15. Dispositif selon la revendication 4, dans lequel le certain canal pour transmettre en mode répétiteur est un certain intervalle de temps, dans lequel le certain canal pour transmettre en mode routeur est un autre intervalle de temps, dans lequel le contrôleur (109) est configuré pour placer l'émetteur en mode répétiteur pendant l'intervalle de temps, ou pour placer l'émetteur en mode routeur pendant l'autre intervalle de temps.

16. Dispositif selon l'une quelconque des revendications 14 ou 15, dans lequel le canal pour transmettre en mode répétiteur est une certaine région passe-bande associée à une certaine largeur de bande, ou dans lequel le canal pour transmettre en mode routeur est une autre région passe-bande associée à une autre largeur de bande, dans lequel le contrôleur (109) est configuré pour placer l'émetteur (107) en mode répétiteur pendant l'autre région passe-bande, ou pour placer l'émetteur en mode routeur pendant l'autre région passe-bande.

17. Dispositif selon l'une quelconque des revendications 1 à 16, dans lequel le signal de données comprend un premier signal de données à transmettre en mode répétiteur et un deuxième signal de données à transmettre en mode routeur,
dans lequel le contrôleur (109) est configuré pour placer l'émetteur (107) en mode répétiteur pour transmettre le premier signal de données en mode répétiteur, et pour placer l'émetteur (107) en mode routeur pour transmettre le deuxième signal de données en mode routeur.

18. Dispositif selon l'une quelconque des revendications précédentes 1 à 17, comprenant, par ailleurs, un moyen pour générer des informations de commande de réseau indiquant un certain canal pour transmettre le signal de données en mode répétiteur, dans lequel le dispositif pour transmettre est configuré pour transmettre les informations de commande de réseau, via le réseau de communication, vers d'autres noeuds de réseau non concernés par la transmission du signal de données, pour demander aux autres noeuds de réseau de ne pas transmettre sur le certain canal, afin d'éviter des interférences.

19. Dispositif selon l'une quelconque des revendications précédentes 1 à 18, comprenant, par ailleurs, un émetteur pour transmettre des signaux via le réseau de transmission.

20. Dispositif selon l'une quelconque des revendications précédentes 1 à 19, dans lequel le signal de données doit être transmis vers le récepteur à distance (103) par un certain trajet de réseau de communication, dans lequel le certain trajet du réseau de communication comporte un noeud de réseau intermédiaire disposé entre le dispositif pour transmettre et le récepteur à distance (103), dans lequel le signal de données doit être transmis en mode répétiteur, et dans lequel le dispositif pour transmettre est configuré pour générer des informations de commande de réseau indiquant le mode répétiteur, et pour transmettre les informations de commande de réseau vers le noeud de réseau intermédiaire, pour placer le noeud de réseau intermédiaire en mode répétiteur.

21. Dispositif selon la revendication 20, dans lequel les informations de commande de réseau comprennent des informations de réservation de canal, les informations de réservation de canal indiquant un certain canal à réserver pour transmettre en mode répétiteur.

22. Dispositif selon la revendication 21, dans lequel le certain canal est un certain intervalle de temps ou une certaine région passe-bande.

23. Dispositif selon l'une quelconque des revendications 20 à 22, comprenant, par ailleurs, un moyen pour générer les informations de commande de réseau.

24. Dispositif selon l'une quelconque des revendications précédentes 1 à 13, comprenant, par ailleurs, un moyen pour déterminer un trajet de communication, via le réseau de transmission, vers le récepteur.

25. Dispositif selon la revendication 24, dans lequel le trajet de communication comporte un noeud de réseau intermédiaire disposé entre le dispositif pour transmettre et le récepteur à distance (103), et dans lequel le moyen pour déterminer est configuré de manière à déterminer les informations de cheminement pour acheminer le signal de données, les informations de cheminement comportant une adresse de réseau du noeud de réseau Intermédiaire.

26. Dispositif selon la revendication 24 ou 25, dans lequel le moyen pour déterminer est configuré de manière à déterminer le trajet de communication de sorte qu'un retard tolérable maximum associé à la transmission du signal de données sur le trajet de communication ne soit pas excédé.

27. Dispositif selon la revendication 26, dans lequel le moyen pour déterminer est configuré de manière à déterminer un noeud de réseau intermédiaire disposé le long du trajet de communication, le noeud de réseau intermédiaire devant être placé en mode répétiteur, pour réduire le retard de transmission.

28. Dispositif selon l'une quelconque des revendications précédentes 1 à 27, comprenant, par ailleurs, un moyen pour dériver les informations de commande du signal de données.

29. Procédé pour transmettre un signal de données, via un réseau de transmission, vers un récepteur à distance (103), comprenant:
recevoir des informations de commande par un contrôleur (109) configuré pour recevoir les informations de commande et pour placer un émetteur (107) en mode routeur ou en mode répétiteur; et
en réponse aux informations de commande, répéter le signal de données, ou acheminer le signal de données par l'émetteur (107) configuré pour être placé en mode répétiteur pour répéter le signal de données ou pour être placé en mode routeur pour acheminer le signal de données, dans lequel, lors du cheminement du signal de données, le signal de données est acheminé vers un noeud de réseau suivant selon une politique de cheminement sans connexion, ou le signal de données est acheminé vers un noeud de réseau suivant selon une politique de cheminement à connexion.

30. Procédé selon la revendication 29, dans lequel le réseau de communication comporte un trajet de communication entre un émetteur (105) et le récepteur à distance (103), l'émetteur (105) et le récepteur à distance (103) étant connectés via le trajet de communication, le réseau de communication additionnel comprenant un noeud de réseau intermédiaire (101), le noeud de réseau intermédiaire (101) étant disposé de manière à être placé en un mode répétiteur ou en un mode routeur, le procédé comprenant, par ailleurs, les étapes suivantes consistant à:
fournir des informations de commande de réseau indiquant le mode répétiteur ou le mode routeur;
transmettre les informations de commande de réseau au noeud de réseau intermédiaire (101);
dans lequel l'étape consistant à recevoir et à répéter ou à acheminer le signal de données est exécutée dans le noeud de réseau intermédiaire (101).

31. Procédé selon la revendication 30, comprenant la réservation de ressources de réseau pour répéter le signal de données.

32. Procédé selon la revendication 30 ou 31, comprenant la réservation d'un canal pour répéter le signal de données.

33. Procédé selon la revendication 32, comprenant la réservation d'un certain intervalle de temps comme canal ou la réservation d'une certaine région passe-bande associée à une certaine largeur de bande comme canal.

34. Procédé selon la revendication 32 ou 33, comprenant la fourniture des informations de commande de réseau au noeud de réseau intermédiaire (101) indiquant, par ailleurs, le canal réservé pour répéter le signal de données.

35. Procédé selon l'une quelconque des revendications 30 à 34, comprenant la réception d'informations de confirmation indiquant la réception des informations de commande par le noeud de réseau intermédiaire (101).

36. Procédé selon la revendication 35, comprenant la transmission du signal de données par l'émetteur en réponse aux informations de confirmation.

37. Procédé selon l'une quelconque des revendications 30 à 36, comprenant le placement automatique du noeud de réseau intermédiaire (101) en mode routeur après répétition du signal de données en mode répétiteur.

38. Procédé selon l'une quelconque des revendications 30 à 36, dans lequel le réseau de communication comprend un autre noeud de réseau intermédiaire disposé le long du trajet de communication, l'autre noeud de réseau intermédiaire étant disposé de manière à être placé en un mode répétiteur ou à être placé en un mode routeur, le procédé comprenant:
fournir d'autres informations de commande de réseau indiquant le mode répétiteur ou le mode routeur;
transmettre les autres informations de commande de réseau à l'autre noeud de réseau intermédiaire;
en réponse aux informations de commande, placer l'autre noeud de réseau intermédiaire en mode répétiteur pour répéter le signal de données reçu de l'émetteur ou du noeud de réseau intermédiaire (101) vers le récepteur à distance (103) ou vers un autre noeud de réseau intermédiaire, placer l'autre noeud de réseau intermédiaire en mode routeur pour acheminer le signal de données reçu de l'émetteur ou du noeud de réseau intermédiaire (101) vers le récepteur à distance (103) ou vers un autre noeud de réseau intermédiaire.

39. Procédé selon l'une quelconque des revendications 30 à 38, comprenant la détermination du trajet de communication, le trajet de communication comprenant le noeud de réseau intermédiaire (101) à placer en mode répétiteur.

40. Programme d'ordinateur pour effectuer les procédés selon l'une quelconque des revendications 30 à 39 lorsque le programme d'ordinateur est exécuté sur un ordinateur.
